# EUROPÄISCHE PATENTSCHRIFT

(11) **EP 2 328 702 B1**
(45) Veröffentlichungstag und Bekanntmachung des Hinweises auf die Patenterteilung: **20.03.2013**
(21) Anmeldenummer: 09777948.2
(22) Anmeldetag: 18.08.2009
(51) Int. Cl.: B23B 31/02

(54) **WERKZEUGHALTERVORRICHTUNG**
TOOL HOLDING DEVICE
DISPOSITIF PORTE-OUTIL

(30) Priorität: 29.08.2008 DE 102008044996
(43) Veröffentlichungstag der Anmeldung: 08.06.2011
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Misselhorn, Hein-Martin
(86) Internationale Anmeldenummer: PCT/EP2009/005982
(87) Internationale Veröffentlichungsnummer: WO 2010/022875

(56) Entgegenhaltungen:
- EP-A- 0 618 030
- EP-A- 1 084 782
- DE-A1- 4 326 023
- GB-A- 2 401 335
- JP-A- 8 099 245
- US-A1- 2002 145 260

## Beschreibung

Die Erfindung betrifft eine Werkzeughaltervorrichtung nach dem Oberbegriff des Anspruchs 1. Insbesondere betrifft die Erfindung eine Werkzeughaltervorrichtung für Werkzeuge mit einem Schaft, z.B. Schrumpfaufnahmen, oder in der Bauart als Flächenspannfutter, wie Weldonaufnahmen oder Whistle-Notch-Aufnahmen, sowie in der Bauart als Spannzangenaufnahmen, wie z.B. ER-Spannzangenaufnahme, OZ-Spannzangenaufnahme oder Hochgenauigkeits-Spannzangenaufnahme.

Aus der EP 1 074 322 Al ist ein rotierendes Futter bekannt, welches als Schrumpfspannfutter für ein Werkzeug, insbesondere für einen Bohrer oder Fräser, ausgebildet ist. Dieses rotierende Futter besitzt einen Kühlmittelzuführungskanal. Das Schrumpffutter besitzt eine Aufnahmebohrung für das Werkzeug, in dem das Werkzeug im Betrieb mittels eines Schrumpfsitzes gehalten ist. Die Aufnahmebohrung weist über den Umfang ihrer Innenseite verteilt mehrere axial verlaufende Längsnuten auf, welche mit dem Zuführkanal für ein Kühlmittel verbunden sind. Die Nuten erstrecken sich bis zum freien Ende des Schrumpffutters und münden dort ins Freie. Die Nuten sind hinsichtlich ihres Querschnitts als Schmalnuten ausgebildet. Bei einem derartigen Schrumpffutter ist beobachtet worden, dass sich insbesondere bei hohen Rotationsdrehzahlen im Betrieb des Futters, welche insbesondere bei kleinen Werkzeugdurchmessern auftreten, ein Ablösen des stirnseitig austretenden Kühlmittelstrahls vom Werkzeug stattfindet und insbesondere bei längeren Werkzeugen eine zuverlässige Versorgung des Schneidbereiches mit Kühlmittel nicht immer gewährleistet ist. Durch diese schmale Ausführung der Nuten tritt das Kühlmittel in Form von drei singulären Strahlen aus. Auch hierdurch ist nicht immer gewährleistet, dass eine zuverlässige Kühlung des Werkzeuges im Schneidbereich/zerspanungsbereich sichergestellt ist.

Aus der DE 198 32 793 B4 ist eine Werkzeughaltervorrichtung in Spannzangenbauart bekannt, bei der Kühlmittel im Inneren der Werkzeughaltervorrichtung geführt wird und durch Schlitze der Spannzange am Werkzeugschaft vorbei zur freien Stirnseite der Werkzeughaltervorrichtung geführt wird. Dort sitzt eine Abdeckkappe, welche einen Einsatz besitzt, wobei der Einsatz einen Ringspalt bildet, durch den Kühlmittel aus dem Inneren der Werkzeughaltervorrichtung ins Freie gelangen kann.

Der Kühlmittelaustritt ins Freie erfolgt hierbei relativ undefiniert und kann nicht immer eine saubere Kühlwasserstrahlführung entlang des Werkzeuges sicherstellen. Außerdem ist für eine Werkzeughaltervorrichtung gemäß der DE 198 32 793 B4 ein erheblicher Kühlmitteldurchsatz erforderlich, was wiederum hohe Pumpleistungen für Kühlmittelpumpen erfordert.

Aus der DE 693 31 325 T2 ist ein Werkzeughaltesystem nach Schrumpffutterbauart bekannt, wobei in einer Aufnahmeöffnung für ein zylindrisches Werkzeug Längsnuten vorhanden sind, durch die Kühlmittel geleitet werden kann. Die Längsnuten sind im Querschnitt als Schmalnuten mit gerundetem Nutgrund ausgebildet.

Aus der FR 22 39 849 ist eine Werkzeughaltervorrichtung bekannt, welche ebenfalls in einer Aufnahme für ein Werkzeug Längsnuten aufweist, durch die ein Kühlfluid leitbar ist. Die Nuten sind im Querschnitt als Schmalnuten mit einem eckigen Nutgrund ausgebildet. Hierdurch tritt die Kühlflüssigkeit in Form von gebündelten Strahlen ins Freie aus. Dies ist unerwünscht.

Aus der japanischen Druckschrift JP 8-99245, auf der der oberbegriff von anspruch 1 basiert, ist eine Konstruktion bekannt, die eine Stauscheibe für das durch die werkzeugaufnahmebohrung herangeleitete Kühlmittel besitzt, die, nach außen überstehend, auf die Stirnseite der Werkzeughaltevorrichtung aufgeschraubt ist und einen Stau- bzw. Sammelraum für das Kühlmittel begrenzt, der im Wesentlichen außerhalb der Aufnahmeöffnung der Werkzeughaltevorrichtung liegt, wodurch bei dieser zusätzlicher Bauraum in Richtung der Längsachse L des Werkzeugs gebraucht wird.

Aufgabe der vorliegenden Erfindung ist es daher, eine Werkzeughaltervorrichtung, insbesondere eine Werkzeughaltervorrichtung in Schrumpffutterbauweise anzugeben, bei der die Kühlmittelführung innerhalb der werkzeughalter-vorrichtung optimiert ist und insbesondere beim Austritt der Kühlflüssigkeit aus der werkzeughaltervorrichtung in Umfangsrichtung um ein Rotationswerkzeug ein geschlossener oder im Wesentlichen geschlossener Kühlmittelmantel, welcher am Schaft des Werkzeuges bzw. am Werkzeug anliegt, gebildet werden kann. Insbesondere sollen Maßnahmen angegeben werden, welche es ermöglichen, den geschlossenen oder im Wesentlichen geschlossenen Kühlmittel-mantel um das Rotationswerkzeug auch bei hohen Drehzahlen, unter Einfluss der Fliehkräfte möglichst nah am Werkzeug, d.h. möglichst gebündelt zu führen und ein Aufpilzen bzw. Aufstreuen des Kühlmittelmantels um das Werkzeug zu minimieren bzw. zu verhindern. Als Kühlmittel kommen alle Arten von Flüssigkeiten in Frage, insbesondere eine Flüssigkeit, ein Gas oder ein Gas-Öl-Gemisch (Ölnebel).

Weiterhin ist es Aufgabe der Erfindung, mit möglichst geringem Kühlmittelvolumenstrom eine möglichst effiziente Kühlung definiert an den stellen, an denen die Zerspanung stattfindet, zu gewährleisten.

Weiterhin ist es die Aufgabe der Erfindung, einen geschlossenen Kühlmittelmantel um das Zerpanungswerkzeug (Rotationswerkzeug) mit befriedigender Strahlführung zur Verfügung zu stellen, ohne allzu große Einschränkungen hinsichtlich der maximal nutzbaren werkzeuglänge hinnehmen zu müssen.

Die Lösung dieser Aufgabe erfolgt durch eine Werkzeughaltervorrichtung mit den Merkmalen des Anspruchs 1. Die Erfindung bildet eine gattungsgemäße Werkzeughaltervorrichtung nach dem oberbegriff des Anspruchs 1 dadurch weiter, dass der Stau- und/oder Sammelraum innerhalb der Aufnahmeöffnung angeordnet und durch eine Ringnut im Bereich des freien Endes des Werkzeughalterkörpers gebildet ist.

Hierdurch gelingt es, einen geschlossenen oder im Wesentlichen geschlossenen Kühlmittelmantel auszubilden, welcher am Ausgang, d. h. im Bereich der Stirnseite des Werkzeughalters den Schaft des Werkzeugs bzw. das Werkzeug vollständig oder nahezu vollständig umgibt - ohne das an die Stirnseite des Werkzeughalterkörpers zusätzliche Einrichtungen zur Leitung und Verteilung des Kühlmittels angesetzt werden müssen, die zu einer Einschränkung hinsichtlich der maximal nutzbaren Werkzeuglänge führen.

Weitere vorteilhafte Ausführungsformen sind in weiteren Ansprüchen angegeben und ergeben sich aus der nachfolgenden Beschreibung einzelner Ausführungsbeispiele.

Im Folgenden wird die Erfindung anhand der Zeichnung beispielhaft näher erläutert. Es zeigen:
- Figur 1:: eine als solche nicht erfindungsgemäße Ausführungsform, die zur Erläuterung der Flachnuten dient, die auch bei den später erläuterten erfindungsgemäßen Ausführungsformen zum Einsatz kommen können;
- Figur 1a:: eine Werkzeughaltervorrichtung gemäß Figur 1 in einer Draufsicht auf ihre werkzeugseitige Stirnseite;
- Figur 2:: eine ebenfalls nicht erfindungsgemäße, jedoch aus den gleichen Gründen wie die erste Ausführungsform gem. Figur 1 dargestellte zweite Ausführungsform der Werkzeughaltervorrichtung in der Bauart eines Schrumpffutters in einem Teillängsschnitt;
- Figur 8:: eine erste Ausführungsform einer erfindungsgemäßen werkzeughaltervorrichtung in der Bauart eines Schrumpffutters in einem Teillängsschnitt;
- Figur 8a :: eine Werkzeughaltervorrichtung gemäß Figur 8 in einer Draufsicht auf ihre werkzeugseitige Stirnseite;
- Figur 16:: eine zweite Ausführungsform einer erfindungsgemä-βen Werkzeughaltervorrichtung in der Bauart eines Schrumpffutters in einem Teillängsschnitt;
- Figur 16a:: eine werkzeughaltervorrichtung gemäß Figur 16 in einer Draufsicht auf ihre werkzeugseitige Stirnseite;
- Figur 16b:: eine Detailansicht auf eine Einzelheit "X" gemäß Figur 16;
- Figur 17:: ein Einlegeteil/Einsatzteil (Deckelelement) der Ausführungsform gemäß Figur 16 in einer Draufsicht;
- Figur 17a:: das Einlegeteil/Einsatzteil (Deckelelement) gemäß Figur 17 in einer Querschnittsansicht;

Im Folgenden wird die Erfindung anhand verschiedener Ausführungsbeispiele von Werkzeughaltervorrichtungen in der Bauart eines Schrumpffutters dargestellt. Selbstverständlich sind die dargestellten Einzelheiten für einen Fachmann auch ohne Weiteres auf Werkzeughaltervorrichtungen in der Bauart von weldonaufnahmen bzw. Whistle-Notch-Aufnahmen übertragbar. Gleiches gilt auch für Werkzeughaltervorrichtungen in SpannzangenBauart, beispielsweise ER-Spannzangenaufnahmen, OZ-Spannzangenaufnahmen und/oder Hochgenauigkeits-Spannzangenaufnahmen.

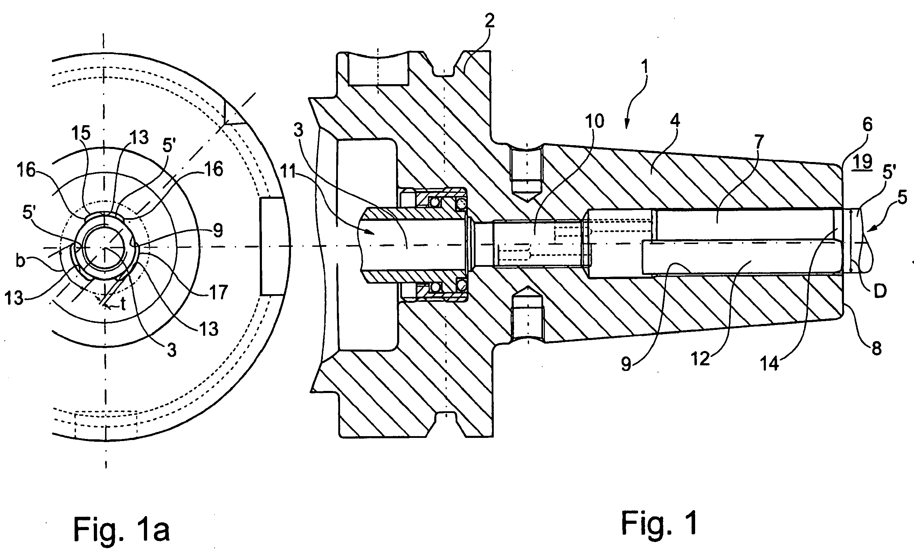

Eine erste Ausführungsform einer nicht erfindungsgemäßen Werkzeughalter-vorrichtung 1 (Figuren 1, 1a) dient zur Erläuterung der Flachnuten, die auch bei den beiden später erläuterten erfindungsgemäßen Ausführungsformen zum Einsatz kommen können. Diese besitzt einen Werkzeughalterkörper 2 mit einer axialen Längsmittelachse 3, um die der Werkzeughalterkörper 2 im Wesentlichen rotationssymmetrisch ausgebildet ist. Der Werkzeughalterkörper 2 besitzt einen Spannabschnitt 4 zur Aufnahme eines Rotationswerkzeuges/Werkzeuges 5. Das Werkzeug 5 besitzt einen Werkzeugschaft 5', wobei der Schaft 5' vom freien Ende 6 des werkzeughalterkörpers 2 her in die Aufnahmeöffnung 7 einsetzbar ist. Der Werkzeugschaft 5' besitzt einen Nenndurchmesser D. Der Spannabschnitt 4 ist in den hier beschriebenen Ausführungsbeispielen als Schrumpfspannabschnitt ausgebildet, welcher das Werkzeug 5 mittels einer Schrumpfpressung hält. Der Spannabschnitt 4 weist von seinem freien Ende 6 her eine Aufnahmeöffnung 7 auf. Die Aufnahmeöffnung 7 ist im Wesentlichen als Aufnahmebohrung mit der axialen Längsmittelachse 3 als Bohrungsmittelachse ausbildet und erstreckt sich von einer Stirnseite 8 des Spannabschnitts 4 axial ein Stück in den Werkzeughalterkörper 2 hinein. Die Aufnahmeöffnung 7 weist eine Innenseite 9 auf, welche als Spannfläche für das zu haltende Werkzeug 5 wirkt. Die Aufnahmeöffnung 7 erstreckt sich in axialer Richtung des werkzeughalterkörpers 2 durch den Spannabschnitt 4 hindurch und mündet in eine zentrale Übergangsbohrung 10, welche ihrerseits im weiteren verlauf in Axialrichtung mit einer Kühlmittelzuführungseinrichtung 11 kommuniziert. Somit ist ein

Strömungskanal für Kühlmittelflüssigkeit gebildet, welcher etwa zentral mittig durch den Werkzeughalterkörper 2 führt. Somit kann also Kühlmittelflüssigkeit, welche der Kühlmittelzuführeinrichtung 11 unter Druck zugeführt wird, über die Übergangsbohrung 10 und die Aufnahmeöffnung 7 zum freien Ende 6 des Werkzeughalterkörpers gelangen. Im Bereich des Spannabschnittes 4 sind als Kühlmittelleiteinrichtungen 12 Flachnuten 13 vorhanden, welche zusammen mit dem in der Aufnahmeöffnung 7 eingespannten Werkzeug 5 Strömungskanäle für Kühlflüssigkeit entlang des Werkzeugschaftes 5' innerhalb des Spannabschnitts 4 bilden. Die Flachnuten 13 erstrecken sich in axialer Richtung über den Spannabschnitt 4 hinweg bis zum freien Ende 6 des Werkzeughalterkörpers 2. Im Bereich des freien Endes 6 der Aufnahmeöffnung 7 ist eine Innenfase 14 angeordnet. Durch die Innenfase 14 ist die Aufnahmeöffnung 7 im Bereich des freien Endes 6 des Werkzeughalterkörpers 2 sich konisch erweiternd ausgebildet.

Im gezeigten Beispiel gemäß den Figuren 1 und 1a sind über den Umfang der Aufnahmeöffnung 7 regelmäßig verteilt drei Flachnuten 13 angeordnet. Die Flachnuten 13 haben einen Nutgrund 15 sowie jeweils Nutseitenwandabschnitte 16. Der Nutgrund 15 der Flachnuten 13 ist im Querschnitt gewölbt ausgebildet und besitzt besonders bevorzugt die Raumform einer zylindersegmentfläche. Die Zylindersegmentfläche ist dabei konzentrisch zur axialen Längsmittelachse 3 ausgebildet.

Die Flachnuten 13 besitzen eine Nuttiefe t und eine Nutbreite b. Die Breite b der Flachnuten 13 ist erfingdungsgemäß größer als die Tiefe t der Flachnuten gewählt und ist in besonders bevorzugter Weise wesentlich größer als die Tiefe t ausgebildet. Das Verhältnis der Nutbreite b zur Nuttiefe t der Flachnuten 13 ist größer als 1:1 und beträgt maximal 25:1. Ein bevorzugter Bereich für dieses Verhältnis ist der Bereich zwischen 2:1 und 15:1. Besonders bevorzugt ist ein Verhältnisbereich zwischen 2:1 und 10:1. Die Tiefe t der Flachnuten 13 beträgt 0,5 % bis 15 %, insbesondere 1 % bis 10 % des Werkzeugnenndurchmessers D.

Ein Übergang zwischen dem Nutgrund 15 und den Nutseitenwandabschnitten 16 ist verrundet ausgebildet, was eine exakte und saubere Strahlführung fördert.

Abweichend von der Darstellung gemäß den Figuren 1 und 1a können die Flachnuten 13 über den Umfang der Innenseite 9 der Aufnahmeöffnung 7 auch ungleichmäßig verteilt sein. Hierdurch ergeben sich unterschiedliche Flächenausdehnungen für die als Spannflächen wirkenden Abschnitte der Innenseite 9. Es konnte beobachtet werden, dass das eingespannte Werkzeug 5 im Betrieb eine geringere Schwingungsanregung erfährt, wenn der wechsel zwischen Spannflächen und Flachnuten 13 unregelmäßig erfolgt. Dies stellt insbesondere bei hohen Drehzahlen des Werkzeuges 5 einen erheblichen Vorteil dar und hebt die Zerspanungsqualität. Eine weitere Maßnahme zur Verringerung der Schwingungsanregung des Werkzeugs 5 ist, die Breite b der Flachnuten 13 unterschiedlich auszubilden, so dass breitere und weniger breitere Flachnuten 13 vorhanden sind.

In bevorzugter Art und Weise ist die Tiefe t der Flachnuten 13 derart zur Innenfase 14 abgestimmt, dass der größere, der Stirnseite 8 zugewandte Durchmesser der Innenfase 14 etwa um die doppelte Tiefe t größer ist als der Nominaldurchmesser der Aufnahmeöffnung 7. Hierdurch wird erreicht, dass die Flachnuten 13 direkt an der Stirnseite 8 in Längsrichtung der Werkzeughaltervorrichtung 2 stufenlos auslaufen. Dies bewirkt eine besonders gute Strahlführung und Strahlbildung und reduziert die Strahlzerstäubung nach dem Verlassen des Werkzeughalterkörpers 2.

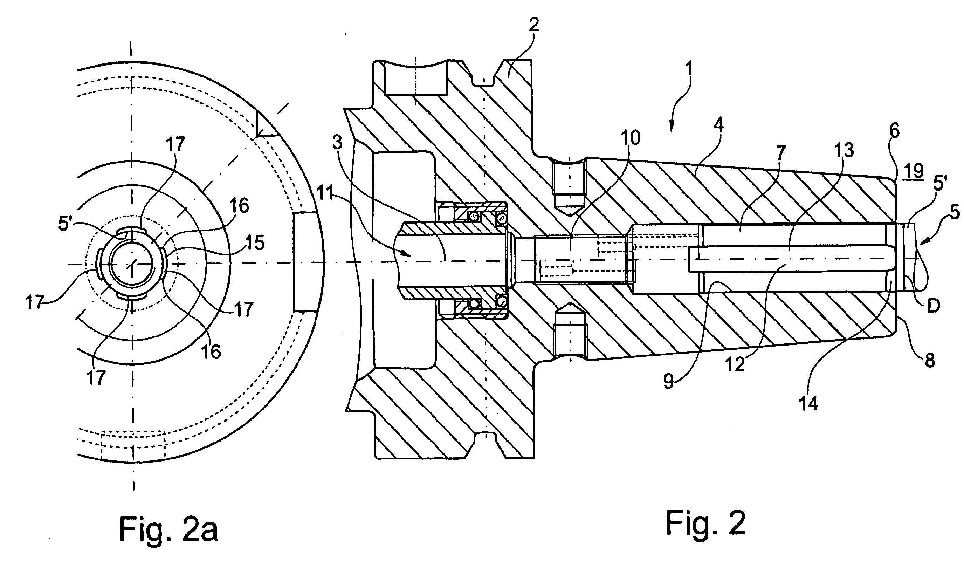

Ein zweites ebenfalls nicht erfindungsgemäßes, sondern lediglich der Erläuterung der optional zu verwendenden Flachnuten dienendes Ausführungsbeispiel einer Werkzeughaltervorrichtung 1 ist in den Figuren 2, 2a gezeigt. Diese Ausführungsform der Werkzeughaltervorrichtung 1 entspricht im Wesentlichen der Ausführungsform gemäß den Figuren 1, 1a, so dass gleiche Elemente mit gleichen Bezugszeichen versehen sind. Die Ausführungsform gemäß den Figuren 2, 2a unterscheidet sich lediglich in der Anzahl der Flachnuten 13, welche über den Umfang der Innenseite 9 verteilt vorgesehen sind. Im vorliegenden Beispiel gemäß den Figuren 2, 2a sind hier 4 Flachnuten gezeigt. Die übrigen im Zusammenhang mit den Figuren 1, la beschriebenen Merkmale und Funktionen der Werkzeughaltervorrichtung sind selbstverständlich auch für das Ausführungsbeispiel gemäß den Figuren 2, 2a gültig.

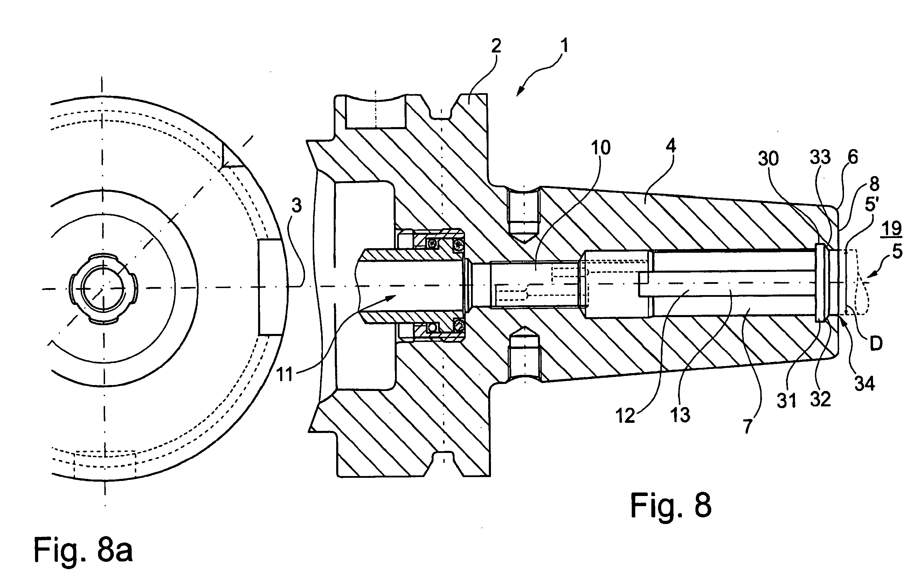

Die Figuren 8, 8a zeigen ein erstes Ausführungsbeispiel einer erfindungsgemäßen Werkzeughaltevorrichtung bei der ein Kühlmittelstau- und/oder sammelraum 30 vorgesehen ist, in der die Kühlmittelleiteinrichtungen 12, welche als Flachnuten 13 ausgebildet sind, münden. Der Stau- und/oder Sammelraum 30 sitzt innerhalb des Werkzeughalterkörpers 2 und wird durch eine umlaufende Ringnut 31 gebildet, welche sich von der Aufnahmeöffnung 7 ein Stück radial nach außen erstreckt. In Längsrichtung des Werkzeughalterkörpers 2 gesehen sitzt der Stau- und/oder Sammelraum 30 im Bereich des äußersten Endbereiches des freien Endes 6. Der Stau- und/oder Sammelraum 30 ist lediglich durch einen Ringbegrenzungssteg 32 von der freien Stirnseite 8 getrennt. Der Stau- und/oder Sammelraum 30 geht mittels einer konisch sich verjüngenden Begrenzungswandung 33 in den Ringsteg 32 über. Der Ringbegrenzungssteg 32 bildet zusammen mit dem eingespannten Werkzeug 5 einen engen Ringspalt 34. Der Innendurchmesser des Ringbegrenzungsstegs 32 ist geringfügig größer als der Außendurchmesser D des Werkzeugschaftes 5'. Hierdurch wird der sehr schmale, den Werkzeugschaft 5' vollständig umgebende Ringspalt 34 gebildet, durch welchen zwischen dem Werkzeugschaft 5' und dem Ringsteg Kühlmittel aus dem Stau- und/oder Sammelraum 30 in die Umgebung austreten kann. Hierdurch wird insbesondere ein geschlossener Kühlmittelmantel, welcher von der Stirnseite 8 weg den Schaft 5' vollständig umgibt, erzeugt. Der Stau- und/oder Sammelraum 30 dient zur Vereinigung der einzelnen Kühlmittelströme, welche durch die Flachnuten 13 in den Stau- und/oder Sammelraum 30 gelangen. De Anordnung des Stau- und/oder Sammelraumes 30 ist innerhalb des Werkzeughalterkörpers 2, da hierdurch zum einen eine besonders einfache, insbesondere einstückige Herstellung des werkzeughalterkörpers 2 ermöglicht ist und zum anderen der Stau- und/oder Sammelraum 30 keine Störkonturen außerhalb der Außenkontur des Werkzeughalterkörpers 2 bildet. Hierdurch ist eine besonders gute Ausnutzung des eingespannten Werkzeuges 5 möglich. Insbesondere durch das Vorsehen von Flachnuten 13 im Sinne der Erfindung als Kühlmittelleiteinrichtungen 12 zur Versorgung des Stau- und/oder Sammelraums 30 mit Kühlflüssigkeit, kann dieser vom Volumen her klein gehalten werden, da aufgrund der breitspurigen Zuführung des Kühlmittels nur wenig Volumen notwendig ist, um eine zuverlässige vereinigung und verwirbelung der einzelnen Kühlmittelströme aus den Flachnuten 13 zu bewirken. Hierdurch kann die Nuttiefe der Ringnut 31 gering gehalten werden. Somit kann eine Schwächung des Werkzeughalterkörpers 2 in seinem freien Endbereich 6 klein gehalten werden. Es genügt lediglich ein radial gering bemessener Einstich in Form einer Ringnut 31 zur Ausbildung eines ausreichend großen Stau- und/oder Sammelraums 30.

Abgesehen von den oben beschriebenen Details unterscheidet sich die Ausführungsform der erfindungsgemäßen Werkzeughalter-vorrichtung 1 nicht weiter von der Ausführungsform gemäß den Figuren 2, 2a.

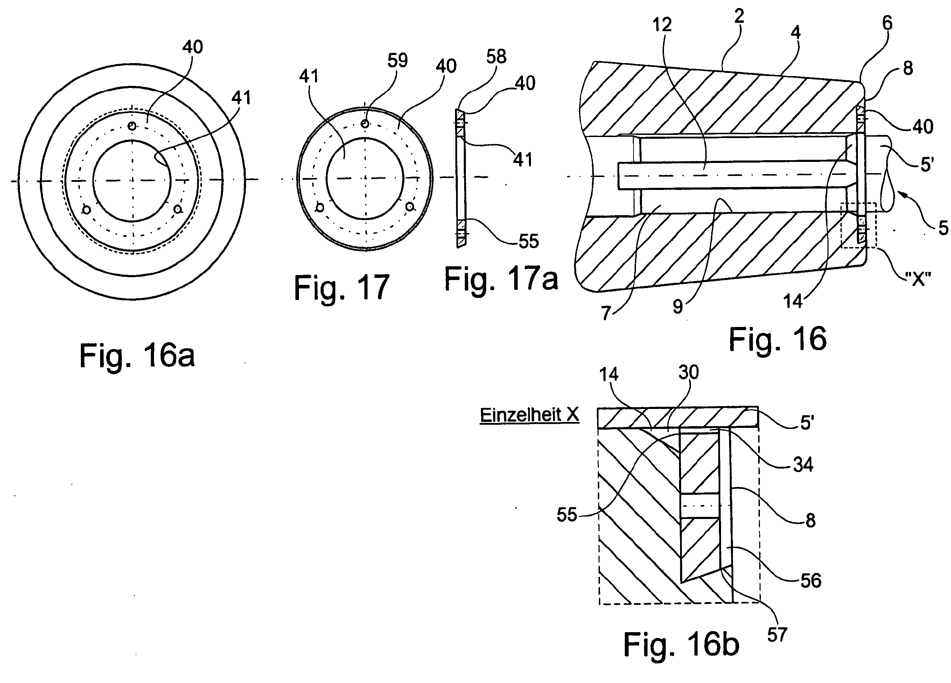

Die nachfolgend beschriebene zweite Ausführungsform der erfindungsgemäßen werkzeughaltervorrichtung 1 (Figuren 16 bis 17a) ist eine Ausführungsform, bei der der Stau- und/oder Sammelraum 30 innerhalb des Werkzeughalterkörpers 2 angeordnet ist und radial im Wesentlichen von der Innenfase 14 begrenzt ist. Das bedeutet, dass ein wesentlicher Anteil des Volumens des Stau- und/oder Sammelraums 30 innerhalb der konischen Erweiterung der Aufnahmeöffnung 7 im Bereich der Innenfase 14 durch die Innenfase 14 gebildet ist. Im Unterschied hierzu ist der Stau- und/oder Sammelraum 30 gemäß der Ausführungsform nach Figur 8 im Wesentlichen durch die Ringnut 31 gebildet, die vollständig durch den Werkzeughalterkörper 2 ausgebildet ist.

Bei der weiteren Ausführungsform der erfindungsgemäßen Werkzeughaltervorrichtung 1 gemäß den Fig. 16 bis 17a ist in der Stirnseite 8 des werkzeughalterkörpers 2 eine Flachvertiefung 5 6 vorhanden, in der das Deckelelement 40 versenkt sitzt. Hierdurch ist die Außenkontur des Werkzeughalterkörpers 2 durch das Deckelelement 40 nicht verändert (vergleiche Figuren 16, 16a, 16b).

Die Flachvertiefung 56 ist im Querschnitt im Wesentlichen trapezförmig ausgebildet und verjüngt sich zur Stirnseite 8 hin, so dass eine Hinterschnittkante 57 ausgebildet ist. Korrespondierend hierzu ist das Deckelelement 40 (Figuren 17, 17a) nach Art einer planen Lochscheibe ausgebildet und besitzt eine angefaste Außenkante 58, welche mit dem Hinterschnitt der Flachvertiefung 56 korrespondiert. Das Deckelelement besitzt die Austrittsöffnung 41, so dass zwischen dem Werkzeugschaft 5' und der Austrittsöffnung 41 der Ringspalt 34 ausgebildet ist. Eine Stau- und/oder Sammelkante 55 begrenzt zusammen mit der Innenfase 14 den Stauurd/oder Sammelraum 30, der die Gestalt einer solchen Ringnut hat, wie sie die Figur 16 b zeigt. Zur Montage des Deckelelements 40 dieser Ausführungsform wird das Deckelelement 40 federnd nach Art einer Tellerfeder gewölbt und im gewölbten Zustand an der Hinter-schnittkante 57 vorbei in die Flachvertiefung 56 eingesetzt. Danach kann die federnde Vorspannung gelöst werden, so dass das Deckelelement 40 gegebenenfalls mit einer Restfedervorspannung vorgespannt in der Vertiefung 56 sitzt und somit sowohl radial als auch axial festgelegt ist. Zweckmäßigerweise weist das Deckelelement 40 über den Umfang verteilt Montagebohrungen 59 auf, in welche Stifte einsetzbar sind, mittels denen die federnde Vorspannung und federnde Wölbung durch radiales Zusammenführen der Stifte erzeugt werden kann.

Für den Fachmann ist klar, dass singulär anhand einzelner Ausführungsbeispiele beschriebene Merkmale ohne weiteres auf andere Ausführungsbeispiele übertragbar oder mit Merkmalen der anderen Ausführungsbeispiele kombinierbar sind. Ebenso ist es für den Fachmann klar ersichtlich, dass die im Rahmen der Ausführungsbeispiele genauer beschriebenen Merkmale, welche anhand eines Schrumpffutters beschrieben worden sind, ebenso auf ein Flächenspannfutter nach Art einer weldon- oder wistle-Notch-Aufnahme übertragbar oder mit deren typischen Ausgestaltungsmerkmalen kombinierbar sind. Gleiches gilt für die Übertragung der beschriebenen Merkmale auf Spannzangenaufnahmen, wie z. B. ER-Spannzangenaufnahmen, OZ-Spannzangenaufnahmen oder Hochgenauigkeits-Spannzangenaufnahmen.

In einer Weiterbildung zeichnet sich die Erfindung durch eine Werkzeughaltervorrichtung aus, wobei ein Querschnitt der Flachnuten 13 eine größere Breite b als Tiefe t aufweist.

In einer Weiterbildung zeichnet sich die Erfindung durch eine Werkzeughaltervorrichtung aus, wobei das Verhältnis der Nutbreite b zur Nuttiefe t der Flachnuten 13 größer als 1:1 bis max. 25:1 ist, insbesondere 2:1 bis 15:1, bevorzugt 2:1 bis 10:1 ist.

In einer weiterbildung zeichnet sich die Erfindung durch eine Werkzeughaltervorrichtung aus, wobei ein Nutgrund 15 der Flachnuten 13 zu einer axialen Längsmittelachse 3 der Werkzeughaltervorrichtung 1 eine konzentrisch gewölbte Zylindersegmentfläche ist.

In einer Weiterbildung zeichnet sich die Erfindung durch eine Werkzeughaltervorrichtung aus, wobei die Flachnuten 13 zusammen mit einem eingesetzten Werkzeug 5 jeweils im Querschnitt ein Ringspaltsegment 17 bilden.

In einer Weiterbildung zeichnet sich die Erfindung durch eine Werkzeughaltervorrichtung aus, wobei die Flachnuten 13 in Umfangsrichtung über die Innenseite 9 ungleichmäßig verteilt angeordnet sind.

In einer Weiterbildung zeichnet sich die Erfindung durch eine werkzeughaltervorrichtung aus, wobei die Flachnuten 13 einer Werkzeughaltervorrichtung 1 unterschiedliche Breiten b haben.

In einer Weiterbildung zeichnet sich die Erfindung durch eine Werkzeughaltervorrichtung aus, wobei sich die Flachnuten 13 in Längsrichtung der Werkzeughaltervorrichtung 1 bis zum freien Ende 6 erstrecken und in eine Innenfase 14 münden, so dass die Flachnuttiefe t im Bereich der Fase 14 zum freien Ende 6 hin abnimmt, insbesondere auf Null abnimmt.

In einer Weiterbildung zeichnet sich die Erfindung durch eine Werkzeughaltervorrichtung aus, wobei der Nutgrund 15 der Flachnuten 13 und Seitenbegrenzungswandungen 16 der Flachnuten 13 verrundet ausgebildet sind.

In einer Weiterbildung zeichnet sich die Erfindung durch eine Werkzeughaltervorrichtung aus, wobei die Tiefe t der Flachnuten 13 0,5 % bis 15 %, insbesondere 1 % bis 10 % des Werkzeugdurchmessers D beträgt.

In einer Weiterbildung zeichnet sich die Erfindung durch eine Werkzeughaltervorrichtung aus, wobei die Flachnuten 13 im Querschnitt halbkreisförmig ausgebildet sind.

In einer Weiterbildung zeichnet sich die Erfindung durch eine Werkzeughaltervorrichtung aus, wobei die Flachnuten 13 im Querschnitt rechteckförmig ausgebildet sind.

In einer weiterbildung zeichnet sich die Erfindung durch eine Werkzeughaltervorrichtung aus, wobei die Flachnuten 13 entlang der Längsachse hinsichtlich der Nuttiefe t sich konisch verjüngend ausgebildet sind.

In einer weiterbildung zeichnet sich die Erfindung durch eine werkzeughaltervorrichtung aus, wobei die Flachnuten 13 zumindest im Endbereich zum freien Ende 6 der Werkzeughaltervorrichtung 1 hin entlang der axialen Längsmittelachse 3 hinsichtlich der Breite b sich erweiternd, insbesondere konisch erweiternd ausgebildet sind.

In einer Weiterbildung zeichnet sich die Erfindung durch eine Werkzeughaltervorrichtung aus, wobei die Ringnut 31 zum freien Ende 6 hin eine sich konisch verjüngende Begrenzungswandung 33 besitzt, welche in einem Ringbegrenzungssteg 32 übergeht, wobei der Ringbegrenzungssteg 32 zusammen mit dem eingespannten Werkzeug 5 den Ringspalt 34 bildet.

In einer Weiterbildung zeichnet sich die Erfindung durch eine Werkzeughaltervorrichtung aus, wobei das Deckelelement 40 als Befestigungseinrichtung 50 eine Schnappverbindungseinrichtung aufweist, welche mit korrespondierenden Gegenschnappeinrichtungen 51 in der Stirnseite 8 des Werkzeughalterkörpers 2 zusammenwirken.

In einer Weiterbildung zeichnet sich die Erfindung durch eine Werkzeughaltervorrichtung aus, wobei das Deckelelement 40 mit der Stirnseite 8 des Werkzeughaltekörpers 2 verschweißt ist.

In einer weiterbildung zeichnet sich die Erfindung durch eine Werkzeughaltervorrichtung aus, wobei das Deckelelement 40 zur Abdichtung des Stau- und/oder Sammelraumes 30 einen Ringsteg 32 aufweist, der mit der Stirnseite B zusammenwirkt.

In einer Weiterbildung zeichnet sich die Erfindung durch eine Werkzeughaltervorrichtung aus, wobei das Deckelelement 40 eine plane Lochscheibe ist und auf der Stirnseite 8 befestigt ist.

In einer Weiterbildung zeichnet sich die Erfindung durch eine Werkzeughaltervorrichtung aus, wobei das Deckelelement 40 eine Stau- und/oder Sammelkante 55 aufweist, welche den durch die Innenfase 14 gebildeten Stau- und/oder Sammelraum 30 zumindest teilweise begrenzt.

In einer Weiterbildung zeichnet sich die Erfindung durch eine Werkzeughaltervorrichtung aus, wobei das Deckelelement 40 eine Lochscheibe ist, welche in einer stirnseitigen Vertiefung 56 des Werkzeughalterkörpers 2 sitzt.

In einer Weiterbildung zeichnet sich die Erfindung durch eine Werkzeughaltervorrichtung aus, wobei das Deckelelement 40 randlich angefast ist und in einer korrespondierenden hinterschnittigen Vertiefung 56 im Werkzeughalterkörper 2 sitzt.

In einer Weiterbildung zeichnet sich die Erfindung durch eine Werkzeughaltervorrichtung aus, wobei das Deckelelement 40 federnd vorgespannt in der Vertiefung 56 sitzt.

In einer Weiterbildung zeichnet sich die Erfindung durch eine Werkzeughaltervorrichtung aus, wobei das Deckelelement 40 mittels einer Drehbajonettverbindung in der stirnseitigen Vertiefung 56 des werkzeughalterkörpers 2 festgelegt ist.

In einer Weiterbildung zeichnet sich die Erfindung durch eine Werkzeughaltervorrichtung aus, wobei in der stirnseitigen Vertiefung 56 benachbart zur Innenfase 14 ein Ringwulst 63 zur Abdichtung des Stau- und/oder Sammelraumes 30 gebildet ist.

### Bezugszeichenliste:

- 1: Werkzeughaltervorrichtung
- 2: Werkzeughalterkörper
- 3: axiale Längsmittelachse
- 4: Spannabschnitt
- 5: Werkzeug
- 5': Werkzeugschaft
- 6: freies Ende
- 7: Aufnahmeöffnung
- 8: Stirnseite
- 9: Innenseite
- 10: Übergangsbohrung
- 11: Kühlmittelzuführeinrichtung
- 12: Kühlmittelleiteinrichtung
- 13: Flachnuten
- 14: Innenfase
- 15: Nutgrund
- 16: Nutseitenwandabschnitt
- 17: Ringspaltsegment
- 18: Strömungskanäle
- 19: Umgebung
- 20: gestrichelte Linie
- 30: Stau- und/oder Sammelraum
- 31: Ringnut
- 32: Ringbegrenzungssteg
- 33: Begrenzungswandung
- 34: Ringspalt
- 34': Strahlformringkanal
- 40: Deckelelement
- 41: Austrittsöffnung
- 42: Kappe
- 43: Kappenboden
- 44: Schnappeinrichtung
- 45: Außenumfangsnut
- 46: Ringsteg
- 47: Kanal
- 48: Querbohrung
- 49: Verdickungswulst
- 50: Befestigungseinrichtung
- 51: Gegenbefestigungseinrichtung
- 52: Bohrung
- 53: weibliches Gewinde
- 54: männliches Gewinde
- 55: Stau- und/oder Sammelkante
- 56: Flachvertiefung
- 57: Hinterschnittkante
- 58: Außenkante
- 59: Montagebohrung
- 60: Strahlformkragen
- 61: Senkkopfschraube
- 63: Ringwulst
- 66: Verriegelungslappen
- V: Tangentialgeschwindigkeit
- α: Winkel
- b: Breite
- t: Tiefe
- 1: Länge
- D: Nenndurchmesser/Außendurchmesser

## Patentansprüche

1. werkzeugraltervorrichtung mit einem Werkzeughalterkörper (2) zum drehfesten Halten eines Rotationswerkzeugs (5) mit einem Schaft (5') mit einem Spannabschnitt (4) und einer Aufnahmeöffnung (7) für den Schaft (5') des Werkzeuges (5), mit einer Kühlmittelzuführungseinrichtung (11) für unter Druck stehendes Kühlmittel, zumindest einer Kühlmittelleiteinrichtung (12) zum Leiten des Kühlmittels hin zum eingespannten Werkzeugschaft (5'), wobei im Bereich des freien Endes (6) des Werkzeughalterkörpers (2) ein Kühlmittelstau- und/oder Sammelraum (30) vorhanden ist, in den die zumindest eine Kühlmittelieiteinrichtung (12) mündet und wobei der Kühlmittelstau- und/oder Sammelraum (30) über einen Ring spalt (34) mit der Umgebung der Werkzeughaltervorrichtung (1) verbunden ist, wobei der Kühlmittelstau- und/oder Sammelraum (30) und der Ringspalt (34) zumindest teilweise vom Werkzeugschaft (5') begrenzt ist, **dadurch gekennzeichnet, dass** der Stau und/oder Sammelraum (30) innerhalb des Werkzeughalterkörpers (2) angeordnet und durch eine Ringnut im Bereich des freien Endes (6) des werkzeughalterkörpers gebildet ist.

2. Werkzeughaltervorrichtung nach Anspruch 1, **dadurch gekennzeichnet, dass** die Ringnut zum freien Ende (6) hin eine sich konisch verjüngende Begrenzungswandung (33) besitzt, welche in einen Ringbegrenzungssteg (32) übergeht, wobei der Ringbegrenzungssteg (32) zusammen mit dem eingespannten Werkzeug (5) den Ringspalt (34) bildet.

3. Werkzeughaltervorrichtung nach Anspruch 1, **dadurch gekennzeichnet, dass** die Ringnut unter Beteiligung eines Deckelelements (40) gebildet wird, das in einer Vertiefung (56) in den Stirnseiten des Werkzeughalterkörpers (2) versenkt sitzt.

4. Werkzeughaltervorrichtung nach Anspruch 1, 2 oder 3, **dadurch gekennzeichnet, dass** das Deckelelement (40) des Stau- und/oder Sammelraumes (30) eine Austrittsöffnung (41) besitzt, welche zusammen mit dem Werkzeug (5) den Ringspalt (34) bildet.

5. Werkzeughaltervorrichtung nach einem der vorhergehenden Ansprüche 2 oder 3, **dadurch gekennzeichnet, dass** das Deckelelement (40) relativ zur Außenkontur radial zurückgesetzt ausgebildet ist.

6. Werkzeughaltervorrichtung nach einem der vorhergehenden Ansprüche, **dadurch gekennzeichnet, dass** das Deckelelement (40) eine Stau- und/oder Sammelkante (55) aufweist, welche den durch die Innenfase (14) gebildeten Stau- und/oder Sammelraum (30) zumindest teilweise begrenzt.

7. Werkzeughalter nach einem der vorhergehenden Ansprüche, **dadurch gekennzeichnet, dass** das Deckelelement (40) eine beidseitig plane Lochscheibe ist.

8. Werkzeughalter nach einem der vorhergehenden Ansprüche, **dadurch gekennzeichnet, dass** das Deckelelement (40) randlich angefast ist und in einer korrespondierenden hinterschnittigen Vertiefung (56) im Werkzeughalterkörper (2) sitzt.

9. Werkzeughalter nach einem der vorhergehenden Ansprüche, **dadurch gekennzeichnet, dass** das Deckelelement (40) federnd vorgespannt in der Vertiefung (56) sitzt.

10. Werkzeughalter nach einem der vorhergehenden Ansprüche, **dadurch gekennzeichnet, dass** das Deckelelement 40 mittels einer Drehbajonettverbindung in der stirnseitigen Vertiefung (56) des Werkzeughalterkörpers (2) festgelegt ist.

11. Werkzeughaltervorrichtung nach einem der vorhergehenden Ansprüche, **dadurch gekennzeichnet, dass** die Kühlmittelleiteinrichtung (12) als zumindest eine Flachnut (13) an einer Innenseite (9) der Aufnahmeöffnung (7) ausgebildet ist.

## Claims

1. A tool holding device, comprising a tool holding body (2) for non-rotatably holding a rotating tool (5) with a shank (5'), with a clamping section (4) and a receiving opening (7) for the shank (5') of the tool (5), with a coolant supply device (11) for pressurized coolant, at least one coolant conveying device (12) for conveying the coolant towards the clamped tool shank (5'), wherein a coolant reservoir and/or collecting chamber (30), into which the at least one coolant conveying device (12) feeds, is provided in the region of the free end (6) of the tool holding body (2), and wherein the coolant reservoir and/or collecting chamber (30) is connected via an annular gap (34) to the region surrounding the tool holding device (1), wherein the coolant reservoir and/or collecting chamber (30) and the annular gap (34) are at least partially delimited by the tool shank (5'), **characterised in that** the reservoir and/or collecting chamber (30) is situated within the tool holding body (2) and is constituted by an annular groove in the region of the free end (6) of the tool holding body.

2. The tool holding device according to claim 1, **characterised in that** towards the free end (6), the annular groove has a conically tapering boundary wall (33) which transitions into an annular boundary rib (32), the annular boundary rib (32), together with the clamped tool (5), forming the annular gap (34).

3. The tool holding device according to claim 1, **characterised in that** the annular groove is formed with the participation of a cover element (40) fitted in a recess (56) in the end faces of the tool holding body (2) in a recessed fashion.

4. The tool holding device according to claim 1, 2 or 3, **characterised in that** the cover element (40) of the reservoir and/or collecting chamber (30) has an outlet opening (41), which, together with the tool (5), forms the annular gap (34).

5. The tool holding device according to any one of the preceding claims 2 or 3, **characterised in that** the cover element (40) is configured radially recessed relative to the outer contour.

6. The tool holding device according to any one of the preceding claims, **characterised in that** the cover element (40) has a retaining and/or collecting edge (55), which at least partially delimits the reservoir and/or collecting chamber (30) that is formed by the internal bevel (14).

7. The tool holding device according to any one of the preceding claims, **characterised in that** the cover element (40) is a bilaterally flat perforated disc.

8. The tool holding device according to any one of the preceding claims, **characterised in that** the cover element (40) is bevelled at the edge and rests in a corresponding undercut recess (56) in the tool holding body (2).

9. The tool holding device according to any one of the preceding claims, **characterised in that** the cover element (40) rests in the recess (56) in a resiliently biased fashion.

10. The tool holding device according to any one of the preceding claims, **characterised in that** the cover element 40 is fixed by means of a rotating-bayonet connection in a recess (56) at an end face of the tool holding body (2).

11. The tool holding device according to any one of the preceding claims, **characterised in that** the coolant conveying device (12) is configured as at least one flat groove (13) on an inner face (9) of the receiving opening (7).

## Revendications

1. Dispositif porte-outil comprenant un corps de porte-outil (2) destiné à maintenir solidairement en rotation un outil rotatif (5) avec une tige (5'), une portion de serrage (4), et une ouverture de réception (7) pour la tige (5') de l'outil (5), avec un système d'admission d'agent de refroidissement (11) pour un agent de refroidissement sous pression, au moins un système de guidage d'agent de refroidissement (12) pour guider l'agent de refroidissement jusqu'à la tige (5') de l'outil serrée, dans lequel dans la région de l'extrémité libre (6) du corps de porte-outil (2) il est prévu un espace d'accumulation et/ou de collecte (30) pour l'agent de refroidissement, dans lequel débouche ledit au moins un système de guidage d'agent de refroidissement (12), et dans lequel l'espace d'accumulation et/ou de collecte (30) pour l'agent de refroidissement est relié via une fente annulaire (34) à l'environnement du dispositif porte-outil (1), et l'espace d'accumulation et/ou de collecte (30) pour l'agent de refroidissement et la fente annulaire (34) sont limités au moins partiellement par la tige (5') de l'outil, **caractérisé en ce que** l'espace d'accumulation et/ou de collecte (30) est agencé à l'intérieur du corps de porte-outil (2), et est formé par une rainure annulaire dans la région de l'extrémité libre (6) du corps de porte-outil.

2. Dispositif porte-outil selon la revendication 1, **caractérisé en ce que** la rainure annulaire possède vers l'extrémité libre (6) une paroi de délimitation (33) qui va en se rétrécissant de manière conique et qui se transforme en une barrette de délimitation annulaire (32), ladite barrette de délimitation annulaire (32) formant la fente annulaire (34) conjointement avec l'outil (5) serré.

3. Dispositif porte-outil selon la revendication 1, **caractérisé en ce que** la rainure annulaire est formée avec participation d'un élément de couverture (40) qui est logé en retrait dans un renfoncement (56) dans les faces frontales du corps de porte-outil (2).

4. Dispositif porte-outil selon la revendication 1, 2 ou 3, **caractérisé en ce que** l'élément de couverture (40) de l'espace d'accumulation et/ou de collecte (30) possède une ouverture de sortie (41) qui forme la fente annulaire (34) conjointement avec l'outil (5).

5. Dispositif porte-outil selon l'une des revendications 2 ou 3, **caractérisé en ce que** l'élément de couverture (40) est réalisé radialement en retrait par rapport au contour extérieur.

6. Dispositif porte-outil selon l'une des revendications précédentes, **caractérisé en ce que** l'élément de couverture (40) comporte une arête d'accumulation et/ou de collecte (55) qui limite au moins partiellement l'espace d'accumulation et/ou de collecte (30) formé par le chanfrein intérieur (14).

7. Dispositif porte-outil selon l'une des revendications précédentes, **caractérisé en ce que** l'élément de couverture (40) est une plaque à trous plane sur les deux côtés.

8. Dispositif porte-outil selon l'une des revendications précédentes, **caractérisé en ce que** l'élément de couverture (40) est chanfreiné en bordure et est logé dans le corps de porte-outil (2) dans un renfoncement correspondant (56) en contre-dépouille.

9. Dispositif porte-outil selon l'une des revendications précédentes, **caractérisé en ce que** l'élément de couverture (40) est logé avec effet ressort en étant précontraint dans le renfoncement (56).

10. Dispositif porte-outil selon l'une des revendications précédentes, **caractérisé en ce que** l'élément de couverture (40) est immobilisé dans le renfoncement (56) du côté frontal du corps de porte-outil (2) au moyen d'une liaison tournante à baïonnette.

11. Dispositif porte-outil selon l'une des revendications précédentes, **caractérisé en ce que** le système de guidage d'agent de refroidissement (12) est réalisé comme au moins une rainure aplatie (13) sur une face intérieure (9) de l'ouverture de réception (7).
